# EUROPÄISCHE PATENTSCHRIFT

(11) **EP 2 879 891 B1**
(45) Veröffentlichungstag und Bekanntmachung des Hinweises auf die Patenterteilung: **27.06.2018**
(21) Anmeldenummer: 13744958.3
(22) Anmeldetag: 10.07.2013
(51) Int. Cl.: B60G 7/02, B60G 3/06, B60G 7/00

(54) **QUERLENKERBASIS**
MOUNTING BASE FOR LATERAL ARM
BASE DE MONTAGE POUR BRAS LATÉRAL

(30) Priorität: 01.08.2012 DE 102012213524
(43) Veröffentlichungstag der Anmeldung: 10.06.2015
(73) Patentinhaber: Schaeffler Technologies AG & Co. KG, 91074 Herzogenaurach (DE)
(72) Erfinder: VOGLER, Tobias, 91074 Herzogenaurach (DE); FISCHER, Raphael, 91074 Herzogenaurach (DE); DENZLER, Nicole, 91052 Erlangen (DE)
(86) Internationale Anmeldenummer: PCT/DE2013/200032
(87) Internationale Veröffentlichungsnummer: WO 2014/019575

(56) Entgegenhaltungen:
- EP-A2- 1 277 603
- DE-A1-102006 026 821
- FR-A1- 2 777 224
- JP-A- H02 117 470
- JP-A- H07 251 615
- US-A- 3 006 627
- US-A- 3 510 148

## Beschreibung

### Gebiet der Erfindung

Die Erfindung betrifft eine Querlenkerbasis zum Anbinden eines aufgelösten Querlenkers an ein Fahrzeug, nach dem Oberbegriff des Anspruchs 1. Derartige Querlenkerbasen werden in EP 1 277 603 A2, US 3 510 148 A, DE 10 2006 026821 A1 und in FR 2 777 224 A1 offenbart.

### Hintergrund der Erfindung

Herkömmliche Radaufhängungen, wie die Mc-Pherson-Radaufhängung besitzen in der Regel einen unaufgelösten Querlenker mit einer asymmetrischen Form, wobei der Querlenker Ober ein radsestiges Gelenk mit dem Rad und über zwei fahrzeugseitige Gelenke mit dem Fahrzeug verbunden ist.

Da die Quersteifigkeit möglichst hoch sein soll, wird das fahrzeugseitige Gelenk, welches dem radseitigen Gelenk in Fahrzeuglängsrichtung betrachtet näher ist, möglichst starr ausgelegt. Hierfür werden beispielsweise Kugelgelenke ohne nennenswerte elastische Elemente eingesetzt. Um eine gewisse Elastizität in Längsrichtung zu realisieren wird für das andere fahrzeugseitige Gelenk ein elastisches Festkörpergelenk, ein so genanntes Gummigelenk, verwendet.

### Zusammenfassung der Erfindung

Bei einem so genannten aufgelösten Querlenker, welcher mindestens zwei Teilquerlenker umfasst, die einerseits mit einem fahrzeugseitigen Gelenk und andererseits mit einem radseitigen Gelenk verbindbar sind und beispielsweise im Wesentlichen nebeneinander angeordnet sind, ist eine gezielte Beeinflussung der Längs- und Quersteifigkeit des Querlenkers bei einer getrennten Anbindung der Teilquerlenker an das Fahrzeug mit einfachen konventionellen Gelenken nur schlecht beziehungsweise kaum realisierbar.

Aufgabe ist es daher, eine Anbindungsmöglichkeit für einen aufgelösten Querlenker an ein Fahrzeug zur Verfügung zu stellen, weiche mit einfachen konventionellen Gelenken realisierbar ist und eine gezielte Beeinflussung der Längs- und Quersteifigkeit des Querlenkers ermöglicht.

Diese Aufgabe wird durch eine Querlenkerbasis gelöst, weiche zum Anbinden eines aufgelösten Querlenkers, weicher mindestens zwei Teilquerlenker umfasst, die einerseits mit einem fahrzeugseitigen Gelenk und andererseits mit einem radseitigen Gelenk verbindbar sind und beispielsweise im Wesentlichen nebeneinander angeordnet sind, an ein Fahrzeug ausgelegt ist und welche mindestens zwei Fahrzeuganbindungsgelenke zum gelenkigen Anbinden der Querlenkerbasis an das Fahrzeug und mindestens zwei Teilquerlenkeranbindungsgelenke zum fahrzeugzeitigen gelenkigen Anbinden jeweils eines der Teilquerlenker an die Querlenkerbasis umfasst. Die Teilquerlenkeranbindungsgelenke dienen dabei den Teilquerlenkern als fahrzeugseitige Gelenke. Radseitig können die Teilquerlenker über ein gemeinsames radseitiges Gelenk oder jeweils getrennt voneinander Ober ein (eigenes) radseitiges Gelenk verbindbar sein, welches im Folgenden auch als Radverbindungsgelenk bezeichnet wird.

Die Querlenkerbasis hat den Vorteil, dass die Längs- und Quersteifigkeit des aufgelösten Querlenkers durch gezielte Positionierung und Auswahl der Fahtzeuganbindungsgelenke - analog zu konventionellen Radaufhängungen - mit einfachen konventionellen Gelenken gezielt beeinflusst werden kann und dabei eine definierte Verteilung der am Querlenker vorherrschenden Quer- und Längskräfte auf die Gelenke der Teilquerlenker erfolgen kann. Die Teilquerlenker sind dabei durch ein Kugelgelenk, an der Querlenkerbasis angebunden. Besonders geeignet ist die Querlenkerbasis für aufgelöste Querlenker, welche eine im Wesentlichen spiegelsymmetrischen Anordnung der Teilquerlenker, insbesondere bei der die Spiegelebene senkrecht zur durch die fahrzeugseitigen Gelenke verlaufenden Achse und mittig zwischen den fahrzeugseitigen Gelenken steht, aufweisen und/oder welche einen oder mehrere schwenkbare Teilquerlenker aufweisen. Bei derartigen Querlenkern ist eine Querlenkerbasis besonders vorteilhaft, da hierbei bei einer getrennten Anbindung der Teilquerlenker an das Fahrzeug eine gezielte Beeinflussung der Längs- und Quersteifigkeit des Querlenkers mit einfachen konventionellen Gelenken kaum realisierbar ist. Der oder die schwenkbaren Teilquerlenker können insbesondere um eine sich zwischen dem radseitigen und fahrzeugseitigen Gelenk des Teilquerlenkers erstreckende Schwenkachse schwenkbar sein Der oder die schwenkbaren Teilquerlenker können dabei beispielsweise dafür ausgelegt sein, dem Rad bei einer Lenkbewegung durch eine Schwenkbewegung auszuweichen und dadurch den maximalen Lenkeinschlagwinkel des Rades, beispielsweise auf 90°, zu vergrößern, so dass beispielsweise der Wendekreis eines Fahrzeugs deutlich verringert und beispielsweise ein Einparken beziehungsweise Ausparken eines Fahrzeugs quer zu regulären Fahrtrichtung des Fahrzeugs ermöglicht wird.

Im Rahmen einer bevorzugten Ausführungsform ist mindestens eines der Fahrzeuganbindungsgelenke radial zur Fahrzeuglängsrichtung starr beziehungsweise steif ausgestaltet. So kann vorteilhafterweise eine gewisse Quersteifigkeit der Anordnung erzielt werden.

Im Rahmen einer weiteren bevorzugten Ausführungsform ist mindestens eines der Fahrzeuganbindungsgelenke axial zur Fahrzeuglängsrichtung weich. So kann vorteilhafterweise eine gewisse Verschiebung beziehungsweise Elastizität der Anordnung in Längsrichtung realisiert werden.

Im Sinn der vorliegenden Erfindung kann unter weich insbesondere verstanden werden, dass das Gelenk in der jeweiligen Richtung elastisch und/oder verschiebbar ist.

Im Rahmen einer weiteren Ausführungsform ist das radial starre Fahrzeuganbindungsgelenk auch axial zur Fahrzeuglängsrichtung starr. So kann vorteilhafterweise eine gewisse Längssteiflgkeit der Anordnung erzielt werden. Beispielsweise kann als axial und radial starres Fahrzeuganbindungsgelenk ein Kugelgelenk, insbesondere ohne nennenswerte elastische Elemente, eingesetzt werden.

Im Rahmen einer weiteren Ausführungsform ist das radial starre Fahrzeuganbindungsgelenk axial zur Fahrzeuglängsrichtung weich. So kann vorteilhafterweise eine gewisse Verschiebung beziehungsweise Elastizität der Anordnung in Längsrichtung realisiert werden. Beispielsweise kann als radial starres und axial weiches Fahrzeuganbindungsgelenk ein Schubgelenk oder Drehschubgelenk, insbesondere Schubgelenk, eingesetzt werden, insbesondere welches radial zur Fahrzeuglängsrichtung kein nennenswertes elastisches Element, zum Beispiel eine radial zur Fahrzeuglängsrichtung starre beziehungsweise unelastische Gelenkschale beziehungsweise Gelenkführung aufweist.

Im Rahmen einer weiteren Ausführungsform ist das axial weiche Fahrzeuganbindungsgelenk auch radial zur Fahrzeuglängsrichtung weich So kann vorteilhafterweise eine gewisse Verdrehung beziehungsweise Elastizität der Anordnung in Längsrichtung realisiert werden. Beispielsweise kann als axial und radial weiches Fahrzeuganbindungsgelenk ein elastisches Festkörpergelenk, ein so genanntes Gummigelenk, eingesetzt werden.

Es ist jedoch auch möglich als axial und radial weiches Fahrzeuganbindungsgelenk ein Gelenk mit einer elastischen Zwischenschicht, beispielsweise in Form einer elastischen Gelenkschale beziehungsweise Gelenkführung, einzusetzen. Insbesondere kann das axial und radial weiche Fahrzeuganbindungsgelenk parallel zur Fahrzeuglängsachse verschiebbar ausgestaltet sein. Beispielsweise kann das axial und radial weiche Fahrzeuganbindungsgelenk ein insbesondere axial zur Fahrzeuglängsachse verschiebbares, Schubgelenk oder Drehschubgelenk, insbesondere Schubgelenk, insbesondere mit einer radial zur Fahrzeuglängsrichtung elastischen Gelenkschale beziehungsweise Gelenkführung sein.

Im Rahmen einer weiteren Ausführungsform ist das axial weiche Fahrzeuganbindungsgelenk radial zur Fahrzeuglängsrichtung starr. So kann vorteilhafterweise eine gewisse Quersteifigkeit der Anordnung erzielt werden. Beispielsweise kann als axial weiches und radial starres Fahrzeuganbindungsgelenk ein Schubgelenk oder Drehschubgelenk, insbesondere Schubgelenk, eingesetzt werden, insbesondere welches radial zur Fahrzeuglängsrichtung kein nennenswertes elastisches Element, zum Beispiel eine radial zur Fahrzeuglängsrichtung starre beziehungsweise unelastische Gelenkschale beziehungsweise Gelenkführung aufweist.

Durch eine Kombination eines axial weichen und radial starren Fahrzeuganbindungsgelenks oder eines axial und radial weichen Fahrzeuganbindungsgelenks mit einem radial starren und axial weichen Fahrzeuganbindungsgelenk kann vorteilhafterweise eine Elastizität beziehungsweise Verschiebbarkeit der Anordnung und damit der fahrzeugseitigen Querlenkeranbindungspunkte parallel zur Fahrzeuglängsrichtung ermöglicht werden, welche sich insbesondere auf eine belastungsoptimierte Gestaltung der Teilquerlenker günstig auswirkt.

Im Rahmen einer bevorzugten Ausgestaltung ist daher das radial starre Fahrzeuganbindungegelenk axial zur Fahrzeuglängsrichtung weich und das axial weiche Fahrzeuganbindungsgetenk radial zu Fahrzeuglängsrichtung starr oder weich. Insbesondere kann dabei das axial weiche Fahrzeuganbindungsgelenk radial zu Fahrzeuglängsrichtung starr sein.

Alternativ oder zusätzlich zu einer elastischen Gelenkausgestaltung, beispielsweise einem elastischen Festkörpergelenk oder einem Gelenk mit einer elastischen Gelenkschale beziehungsweise Gelenkführung, kann die Elastizität der Anordnung durch ein zusätzliches elastisches Element, beispielsweise eine Feder, eingestellt werden. Grundsätzlich ist es sowohl möglich, dass die Querlenkerbasis eines oder mehrere axial zur Fahrzeuglängsrichtung elastische Elemente als auch eines oder mehrere radial zur Fahrzeuglängsrichtung elastische Elemente, beispielsweise Federn, umfasst. Der Vorteil eines zusätzlichen elastischen Elementes ist hierbei, dass die Elastizität des zusätzlichen elastischen Elementes unabhängig von den Gelenken festgelegt werden kann.

Vorzugsweise verfügt die Querlenkerbasis über mindestens ein Gelenk oder ein weiteres elastisches Element, welches axial zur Fahrzeuglängsrichtung elastisch ist.

Dabei ist es möglich die axiale Elastizität der Anordnung durch das axial weiche Fahrzeuganbindungsgelenk zu realisieren, beispielsweise in dem hierfür ein elastisches Festkörpergelenk, ein so genanntes Gummigelenk, oder ein Gelenk mit einer elastischen Gelenkschale beziehungsweise Gelenkführung eingesetzt wird, welche beispielsweise axial oder axial und radial zur Fahrzeuglängsrichtung elastisch ist.

Im Rahmen einer speziellen Ausgestaltung wird eine axiale Elastizität der Anordnung jedoch dadurch gewährleistet, dass die Querlenkerbasis ein axial zur Fahrzeuglängsrichtung elastisches Element, insbesondere eine Feder, umfasst. Der Vorteil hierbei ist, dass die Elastizität des federnden Elements unabhängig von den Gelenken festgelegt werden kann.

Dabei kann das radial starre Fahrzeuganbindungsgelenk als axial zur Fahrzeuglängsrichtung verschiebbares Schubgelenk oder Drehschubgelenk, insbesondere Schubgelenk, und das axial weiche Fahrzeuganbindungsgelenk als radial starres, axial zur Fahrzeuglängsrichtung verschiebbares Schubgelenk oder Drehschubgelenk, insbesondere Schubgelenk, ausgestaltet sein

Das axial elastische Element kann dabei beispielsweise an dem axial weichen oder radial starren Fahrzeuganbindungsgelenk, insbesondere dem axial weichen Fahrzeuganbindungsgelenk, angeordnet sein Beispielsweise kann das axial elastische Element, bezogen auf die Vorwärtsfahrtrichtung des Fahrzeugs, hinter dem axial weichen Fahrzeuganbindungsgelenk oder vor dem radial starren Fahrzeuganbindungsgelenk, insbesondere hinter dem axial weichen Fahrzeuganbindungsgelenk, angeordnet sein.

Das radial starre Fahrzeuganbindungsgelenk kann insbesondere das, bezogen auf die Vorwärtsfahrtrichtung des Fahrzeugs, vordere Fahrzeuganbindungsgelenk und das axial weiche Fahrzeuganbindungsgelenk das, bezogen auf die Vorwärtsfahrtrichtung des Fahrzeugs, hintere Fahrzeuganbindungsgelenk sein.

Die Querlenkerbasis kann insbesondere einen Querlenkerbasisgrundkörper aufweisen, welcher mit den Fahrzeuganbindungsgelenken und den Teilquerlenkeranbindungsgelenken versehen ist.

Da die meisten Gelenke mehrteilig sind und in der Regel zumindest so viele Bauteile aufweisen, wie über das Gelenk verbunden werden sollen, kann unter einem Gelenk im Sinn der vorliegenden Erfindung, insbesondere auch nur ein Gelenkteil, beispielsweise eine Gelenkschale/Gelenkführung oder eine Gelenkkugel/Gelenkbolzen, verstanden werden.

Beispielsweise kann an beziehungsweise in der Querlenkerbasis als Teilquerlenkeranbindungsgelenk eine Gelenkschale zur Ausbildung eines Kugelgelenks mit einer an einem Teilquerlenker ausgebildeten Gelenkkugel ausgebildet sein, oder gegebenenfalls umgekehrt. Zur Ausbildung eines kugelgelenkförmigen Fahrzeuganbindungsgelenks kann an beziehungsweise in der Querlenkerbasis eine Gelenkschale zur Ausbildung eines Kugelgelenks mit einer an dem Fahrzeug ausgebildeten Gelenkkugel ausgebildet sein, oder gegebenenfalls umgekehrt. Zur Ausbildung eines Fahrzeuganbindungsgelenks in Form eines Schubgelenks oder Drehschubgelenks kann die Querlenkerbasis teilweise als Gelenkbolzen ausgestaltet sein, wobei das Fahrzeug mit einer Gelenkführung zur Führung des Bolzens ausgestattet ist, oder gegebenenfalls umgekehrt.

Die Quertenkerbasis kann insbesondere plattenförmig oder balkenförmig ausgestaltet sein. Insbesondere kann die Querlenkerbasis ein einteiliges Bauteil sein. Grundsätzlich ist es möglich die Querlenkerbasis teilweise aus starren beziehungsweise unelastischen und teilweise aus elastischen Materialien auszubilden. Es ist jedoch ebenso möglich die Querlenkerbasis ausschließlich aus einem oder mehreren starren Materialien, beispielsweise Metallen, auszubilden.

Die Fahrzeuganbindungsgelenke und die Teilquerlenkeranbindungsgelenke können insbesondere auf der gleichen Achse angeordnet sein.

Die Fahrzeuganbindungsgelenke können insbesondere auf einer Seite des Querlenkerbasisgrundkörpers und die Teilquerlenkeranbindungsgelenke auf einer dazu gegenüberliegenden Seite des Querlenkerbasiagrundkörpers angeordnet sein.

Die Querlenkerbasis kann zum Anbinden eines aufgelösten Querlenkers für ein, insbesondere gelenktes, Rad, beispielsweise ein Vorderrad oder ein Hinternrad, insbesondere ein Vorderrad, eingesetzt werden. Insbesondere kann die Querlenkerbasis zum Anbinden eines aufgelösten Querlenkers für ein, durch einen Radnabenantrieb angetriebenes, insbesondere gelenktes, Rad eingesetzt werden.

Bei dem Fahrzeug kann es sich insbesondere um einen Personenkraftwagen (PKW), beispielsweise ein Stadtfahrzeug, insbesondere mit Radnabenantrieb, oder gegebenenfalls um einen Lastkraftwagen (LKW) und/oder Nutzkraftwagen (NKW) handeln.

Ein weiterer Gegenstand der vorliegenden Erfindung ist eine Radaufhängung für ein gelenktes Rad eines Fahrzeugs, welche eine erfindungsgemäße Querlenkerbasis und einen aufgelösten Querlenker mit mindestens zwei Teilquerlenkern umfasst. Beispielsweise kann es sich bei der Radaufhängung um eine Radaufhängung für ein Vorderrad oder ein Hinterrad handeln. Erfindungsgemäß handelt es sich bei der Radaufhängung um eine Radaufhängung für ein durch einen Radnabenantrieb angetriebenes gelenktes Rad. Dabei sind die Teilquerlenker einerseits mit einem Teilquerlenkeranbindungsgelenk der Querlenkerbasis verbunden oder verbindbar. Anderseits sind die Teilquerlenker mit einem Radverbindungsgelenk zum gelenkigen Anbinden des Querlenkers an das Rad verbunden oder verbindbar. Dabei können die Teilquerlenker über ein gemeinsames Radverbindungsgelenk oder jeweils getrennt voneinander über ein (eigenes) Radverbindungsgelenk mit dem Rad verbunden beziehungsweise verbindbar sein.

Im Rahmen einer bevorzugten Ausführungsform ist mindestens einer der Teilquerlenker um eine Schwenkachse schwenkbar. Insbesondere kann mindestens einer der Teilquerlenker um eine sich zwischen dem Radverbindungsgelenk und dem Teilquerlenkeranbindungsgelenk des Teilquerlenkers erstreckende (kinematische) Schwenkachse schwenkbar sein. Dabei kann von dem mindestens einen schwenkbaren Teilquerlenker insbesondere mindestens ein Teil, insbesondere vollständig, beabstandet zu der Schwenkachse ausgebildet sein. Durch einen derartig ausgestalteten Querlenker kann vorteilhafterweise die Manövrierbarkeit des Fahrzeugs verbessert werden. Die erfindungsgemäße Radaufhängung ist für durch einen Radnabenantrieb angetriebene lenkbare Räder vorteilhaft, da diese ohne eine Antriebswelle angetrieben werden können und die Antriebskräfte in Richtung der Lenkrichtung wirken können und somit das Potential aufweisen sehr hohe Lenkeinschläge zu realisieren. Dieses Potential kann jedoch mit konventionellen Radaufhängungen nicht ausgenutzt werden, da bei diesen bei sehr hohen Lenkwinkeln das Rad mit dem Querlenker der Radaufhängung kollidieren würde.

Dadurch, dass mindestens ein Teil des schwenkbaren Teilquerlenkers von der Schwenkachse beabstandet ausgebildet ist, kann der schwenkbare Teilquerlenker beim Einlenken des Rades durch eine Schwenkbewegung dem Rad ausweichen, so dass der Lenkwinkel des Rades vergrößert werden kann. Insgesamt können so sehr große maximale Lenkwinkel, beispielsweise von bis 70°, 80°, 85°, 90° und sogar über 90°, erzielt werden. So kann vorteilhafterweise die Manövrierbarkeit beziehungsweise Wendigkeit des Fahrzeugs verbessert werden. Bereits durch einen derartig ausgestalteten Teilquerlenker kann, beispielsweise durch einen Paralleleinschlag aller Räder der Vorderachse und Hinterachse um 90°, das Einparken des Fahrzeugs vereinfacht werden Durch zwei derartig ausgestattete Teilquerlenker kann vorteilhafterweise der maximale Lenkwinkel in beide Lenkeinschlagsrichtungen erhöht werden, wodurch die Manövrierbarkeit beziehungsweise Wendigkeit weiter erhöht, der Wendekreis des Fahrzeugs reduziert und große Fahrtrichtungsänderung ermöglicht werden können.

Durch einen mit der erfingungsgemäßen Radaufhängung erzielbaren maximalen Lenkwinkel von über 90° kann sogar vorteilhafterweise unter Einhaltung der Ackermannbedingung (alle projizierten Radachsen Schneiden sich im Kurvenmittelpunkt) bewirkt werden, dass sich ein Fahrzeug mit ungelenkter Hinterachse um die Mitte der Hinterachse drehen kann. Das kurveninnere Rad würde dann einen Lenkwinkel von 9O°+x und das kurvenläufigere Rad einen Lenkwinkel von 90°-x, wobei x abhängig von der Spurweite, dem Radstand und gegebenenfalls dem Lenkrollradius des Fahrzeugs ist. Bei Fahrzeugen mit gelenkter Vorderachse und gelenkter Hinterachse, wäre es sogar möglich, das Fahrzeug um zum Beispiel die Fahrzeugmitte zu drehen.

Zudem kann eine erfindungsgemäße Radaufhängung weniger aufwendig und damit kostengünstiger und zuverlässiger als eine Radaufhängung mit einem elektrischen Aktuator mit Getriebe und Steuermodule/n sein. Zudem kann eine Radaufhängung mit einem erfindungsgemäßen Querlenker ein vergleichsweise geringes Gewicht aufweisen.

Die teilweise Beabstandung des mindestens einen schwenkbaren Teilquerlenkers von der Schwenkachse kann durch eine zweidimensionale oder dreidimensionale Ausformung des schwenkbaren Teilquerlenkers bewirkt werden.

Im Rahmen einer Ausführungsform umfasst der mindestens eine schwenkbare Teilquertenker mindestens ein starres Teilquerlenkersegment, welches zumindest teilweise (einfach oder mehrfach) gewinkelt und/oder teilweise (einfach oder mehrfach) gebogen ausgeführt ist, So kann beispielsweise realisiert werden, dass mindestens ein Teil des schwenkbaren Teilquerlenkers, insbesondere im Bereich der Winkelung oder Biegung, beabstandet zu der Schwenkachse ist. Zum Beispiel kann das starre Teilquerlenkersegment im Wesentlichen U-förmig oder bügelförmig ausgestaltet sein. Gegebenenfalls kann der mindestens eine schwenkbare Teilquerlenker in Form eines starren Teilquerlenkersegments ausgebildet sein, welches zumindest teilweise (einfach oder mehrfach) gewinkelt und/oder teilweise (einfach oder mehrfach) gebogen, zum Beispiel im Wesentlichen U-förmig oder bügelförmig, ausgeführt ist.

Im Rahmen einer anderen, alternativen oder zusätzlichen Ausführungsform umfasst der mindestens eine schwenkbare Teilquerlenker mindestens zwei starre Teilquerlenkersegmente, weiche durch ein flexibles Verbindungselement, insbesondere zueinander gewinkelt, verbunden sind. So kann ebenfalls realisiert werden, dass mindestens ein Teil des schwenkbaren Teilquerlenkers, insbesondere im Bereich des flexiblen Verbindungselements, beabstandet zu der Schwenkachse ist, Gegebenenfalls kann der schwenkbare Teilquerlenker aus zwei, über ein flexibles Verbindungselement, beispielsweise zueinander gewinkelt, verbundenen, starren Teilquerlenkersegmenten bestehen.

Das flexible Verbindungselement kann beispielsweise ein Gelenk oder eine Kombination aus zwei oder mehr Gelenken sein.

Im Rahmen einer speziellen Ausgestaltung dieser Ausführungsform ist das flexible Verbindungselement des mindestens einen Teilquerlenkers ein Kugelgelenk.

Grundsätzlich ist es möglich die Schwenkbewegung des mindestens einen schwenkbaren Teilquerlenkers auf verschiede Weise zu bewirken.

Im Rahmen einer bevorzugten Ausführungsform ist der mindestens eine schwenkbare Teilquerlenker jedoch durch eine Radkoppel, zum Beispiel eine Radträgerkoppel, mit einem Bauteil verbunden, welches eine mit einer Lenkbewegung des Rades einhergehende Bewegung vollzieht. So kann vorteilhafterweise eine an die Lenkbewegung des Rades gekoppelte Bewegung des Teilquerlenkers bewirkt werden. Bei dem Bauteil kann es sich beispielsweise um das Rad, insbesondere den Radträger, ein Lenkgetriebe zur Lenkung des Rades oder einen Aktuator zur Lenkung des Rades handeln. Dadurch, dass der mindestens eine Teilquerlenker durch die Radkoppel aktuiert wird, kann vorteilhafterweise auf zusätzliche Bauteile zur Aktuierung der Radkoppel verzichtet und damit die Herstellungskosten und die Energieeffizienz verbessert werden.

Im Rahmen einer weiteren bevorzugten Ausführungsform umfasst der Querlenker mindestens zwei schwenkbare Teilquerlenker. Insbesondere kann der Querlenker einen ersten Teilquerlenker und einen zweiten Teilquerlenker umfassen, wobei der erste Teilquerlenker um eine sich zwischen dem Radverbindungsgelenk und dem Teilquerlenkeranbindungsgelenk des ersten Teilquerlenkers erstreckende Schwenkachse schwenkbar ist und mindestens ein Teil des ersten Teilquerlenkers beabstandet zu der Schwenkachse des ersten Teilquerlenkers ausgebildet ist und wobei der zweite Teilquerlenker um eine sich zwischen dem Radverbindungsgelenk und dem Teilquerlenkeranbindungsgelenk des zweiten Teilquerlenkers erstreckende Schwenkachse schwenkbar ist und mindestens ein Teil des zweiten Teilquerlenkers beabstandet zu der Schwenkachse des zweiten Teilquerlenkers ausgebildet ist. Der erste Teilquerlenker kann dabei mindestens ein starres Teilquerlenkersegment, welches zumindest teilweise gewinkelt und/oder teilweise gebogen ausgeführt ist, und/oder mindestens zwei starre Teilquerlenkersegmente, welche durch ein flexibles Verbindungselement, beispielsweise Kugelgelenk, insbesondere zueinander gewinkelt, verbunden sind, umfassen. Der zweite Teilquerlenker kann dabei ebenfalls mindestens ein starres Teilquerlenkersegment, welches zumindest teilweise gewinkelt und/oder teilweise gebogen ausgeführt ist, und/oder mindestens zwei starre Teilquerlenkersegmente, weiche durch ein flexibles Verbindungselement, beispielsweise Kugelgelenk, insbesondere zueinander gewinkeit, verbunden sind, umfassen. Der mindestens eine Teilquerlenker, insbesondere die mindestens zwei Teilquerlenker, zum Beispiel der erste und/oder zweite Teilquerlenker, kann/können beispielsweise bei einem Übergang des Rades von einer uneingelenkten Stellung in eine maximal eingelenkte Stellung von einer ersten Stellung, insbesondere in welcher der mindestens eine beabstandete Teil im Wesentlichen vertikal ausgerichtet ist, in eine zweite Stellung, insbesondere in welcher der mindestens eine beabstandete Teil im Wesentlichen horizontal ausgerichtet ist, schwenkbar sein, insbesondere wobei in der zweiten Stellung ein von dem mindestens einen beabstandeten Teil umgebener Raum von dem Rad einnehmbar ist. Der mindestens eine Teilquerlenker, insbesondere die mindestens zwei Teilquerlenker, zum Beispiel der erste und/oder zweite Teilquerlenker, kann/können beispielsweise im Wesentlichen U-förmig oder bügelförmig ausgestaltet sein, insbesondere wobei sich die Schwenkachse entlang der Öffnung des Us beziehungsweise Bügels erstrecken kann Dabei können unter im Wesentlichen vertikal beziehungsweise im Wesentlichen horizontal - neben der Vertikalen beziehungsweise Horizontalen - auch Ausrichtungen verstanden werden, welche beispielsweise bis zu ± 20° von der Vertikalen beziehungsweise Horizontalen abweichen.

Insofern der Querlenker mindestens zwei schwenkbare Teilquerlenker, beispielsweise einen ersten und einen zweiten, schwenkbaren Teilquerlenker, umfasst, ist vorzugsweise mindestens einer der schwenkbaren Teilquerlenker, beispielsweise der erste und/oder zweite Teilquerlenker, durch eine Radkoppel mit einem Bauteil verbunden, welches eine mit einer Lenkbewegung des Rades einhergehende Bewegung vollzieht.

Grundsätzlich ist es dabei möglich die schwenkbaren Teilquerlenker einzeln beziehungsweise getrennt voneinander durch mehrere Radkoppeln anzubinden, um eine gleichsinnige Bewegung der Teilquerlenker zu bewirken.

Um den Querlenker einfach zu halten, reicht es jedoch aus (nur) einen der schwenkbaren Teilquerlenker durch die Radkoppel mit dem Bauteil zu verbinden, welcher eine mit einer Lenkbewegung des Rades einhergehende Bewegung vollzieht, wobei eine gleichsinnige Bewegung des beziehungsweise der anderen schwenkbaren Teilquerfenker/s durch eine oder mehrere Querlenkerkoppeln bewirkt werden kann. So kann vorteilhafterweise der Effekt erzielt werden, dass der beziehungsweise die anderen schwenkbaren Teilquerlenker eine "entsprechende" Bewegung mit dem lenkenden Rad vollführen, und eine Ausweichbewegung vollziehen.

Im Rahmen einer weiteren bevorzugten Ausführungsform weist daher der Querlenker eine Querlenkerkoppel auf, durch welche mindestens zwei schwenkbare Teilquerlenker, insbesondere gelenkig, miteinander verbunden sind. Die Querlenkerkoppel kann dabei insbesondere die flexiblen Verbindungselemente von zwei schwenkbaren Teilquerlenkern miteinander verbinden.

Die Teilquerlenker können einen gemeinsamen radseitigen Drehpunkt aufweisen und beispielsweise direkt oder indirekt gelenkig mit dem Radträger des Rades verbunden sein.

Im Rahmen einer Ausführungsform umfasst der Querlenker ein Radverbindungsgelenk. Ober welches die Teilquerlenker (gemeinsam) mit dem Rad verbunden sind. Zum Beispiel kann dabei der erste Teilquerlenker einerseits mit einem Radverbindungsgelenk verbunden sein, mit welchem auch der zweite Teilquedenker verbunden ist. Auf der anderen Seite können dabei der erste und der zweite Teilquerlenker getrennt voneinander mit jeweils einem (eigenen) Teilquerienkeranbindungsgelenk verbunden sein. Bei dem Radverbindungsgelenk kann es sich beispielsweise um ein einzelnes Gelenk, insbesondere ein Kugelgelenk, handeln. Es ist jedoch ebenso möglich das Radverbindungsgelenk als mehrgelenkige Zusammenführung auszugestalten, beispielsweise welche ein Kugelgelenk und zwei Drehgelenke umfasst, wobei die Zusammenführung durch das Kugelgelenk gelenkig mit dem Rad verbindbar ist und durch die Drehgelenke jeweils gelenkig mit den Teilquerienkern verbunden ist.

Es ist jedoch ebenso möglich, dass die Teilquerlenker getrennte radseitige Drehpunkte aufweisen.

Im Rahmen einer anderen Ausführungsform umfasst daher der Querlenker mehrere, insbesondere zwei, Radverbindungsgelenke, wobei die Teilquerlenker jeweils getrennt voneinander über ein Radverbindungsgelenk mit dem Rad verbindbar sind. Die Radverbindungsgelenke können dabei beispielsweise Kugelgelenke sein. Zum Beispiel kann dabei der erste Teilquerlenker einerseits mit einem (eigenen) Radverbindungsgelenk und andererseits mit einem (eigenen) Teilquerlenkeranbindungsgelenk verbunden sein, wobei der zweite Teilquerlenker ebenfalls einerseits mit einem (eigenen) Radverbindungsgelenk und andererseits mit einem (eigenen) Teilquertenkeranbindungsgelenk verbunden ist

Das beziehungsweise die Radverbmdungsgelenk/e können sowohl zum Tragen als auch zum Führen des Rades ausgestaltet sein, Daher kann das beziehungsweise können die Radverbindungsgelenke auch als Radführungs- und/oder Traggelenke bezeichnet werden.

Die Teilquerlenkeranbindungsgelenke sind einzelne Kugelgelenke. Dadurch dass die Teilquerlenker durch das oder die Radbefestigungsgelenke und die Teilquerlenkeranbindungsgelenke drehgelagert sind, können sie um ihre Längsachse schwenken.

Im Rahmen einer weiteren Ausführungsform betragt der Abstand zwischen dem mindestens einen zur Schwenkachse beabstandeten Teil des schwenkbaren Teilquerlenkers und der Schwenkachse des schwenkbaren Teilquerlenkers ≥ 2 cm, insbesondere ≥ 5 cm, beispielsweise ≥ 10 cm, zum Beispiel von ≥ 5 cm oder ≥ 10 cm bis s 100 cm (PKW/NKW) oder s 30 cm (PKW), beispielsweise etwa 16 cm (PKW), Insofern der Querlenker einen ersten und einen zweiten schwenkbaren Teilquerlenker aufweist, kann sowohl der Abstand zwischen dem mindestens einen zur Schwenkachse des ersten Teilquerlenkers beabstandeten Teil des ersten Teilquerlenkers und der Schwenkachse des ersten Teilquerlenkers als auch der Abstand zwischen dem mindestens einen zur Schwenkachse des zweiten Teilquerlenkers beabstandeten Teil des zweiten Teilquertenkers und der Schwenkachse des zweiten Teilquerlenkers ≥ 2 cm, insbesondere ≥ 5 cm, beispielsweise ≥ 10 cm, zum Beispiel von ≥ 5 cm oder ≥ 10 cm bis ≤ 100 cm (PKW/NKW) oder ≤ 30 cm (PKW), beispielsweise etwa 16 cm (PKW), betragen. Dabei kann der Abstand des ersten Teilquerlenkers insbesondere unterschiedlich von dem Abstand des zweiten Teilquerlenkers sein,

Der von der Schwenkachse beabstandete Teil des mindestens einen schwenkbaren Teliquerlenkers kann sich beispielsweise über eine Länge von ≥ 5 cm, insbesondere ≥ 10 cm, beispielsweise ≥ 15 cm oder ≥ 30 cm, zum Beispiel von ≥ 5 cm oder ≥ 10 cm oder ≥ 15 cm oder ≥ 30 cm bis ≤ 100 cm (LKW/NKW) oder ≤ 50 cm (PKW) oder ≤ 40 cm, beispielsweise etwa 25 cm (PKW), insbesondere in mindestens einem vorstehend angegebenen Abstand, zur Schwenkachse, erstrecken. Insofern der Querlenker einen ersten und einen zweiten schwenkbaren Teilquerlenker aufweist, kann sich sowohl der von der Schwenkachse des ersten Teilquerienkers beabstandete Teil des ersten Teilquerlenkers als auch der von der Schwenkachse des zweiten Teilquerlenkers beabstandete Teil des zweiten Teilquerlenkers über eine Länge von ≥ 5 cm, insbesondere ≥ 10 cm, beispielsweise ≥ 15 cm oder ≥ 30 cm, zum Beispiel von ≥ 5 cm oder ≥ 10 cm oder ≥ 15 cm oder ≥ 30 cm bis s 100 cm (LKW/NKW) oder ≤ 50 cm (PKW) oder ≤ 40 cm, beispielsweise etwa 25 cm (PKW), insbesondere in mindestens einem vorstehend angegebenen Abstand zur jeweiligen Schwenkachse, erstrecken. Dabei kann die Länge des ersten Teilquerienkers insbesondere unterschiedlich von der Länge des zweiten Teilquerienkers sein.

Der Querlenker kann ein unterer und/oder oberer Querlenker sein.

Ferner betrifft die vorliegende Erfindung ein Fahrzeug, insbesondere mit mindestens einem durch einen Radnabenantrieb angetriebenen Rad, welches eine erfindungsgemäße Querlenkerbasis und/oder eine erfindungsgemäße Radaufhängung umfasst. Das Fahrzeug kann insbesondere ein Kraftfahrzeug, beispielsweise ein Elektrofahrzeug, insbesondere mit Radnabenantrieb, sein, Zum Beispiel kann das Fahrzeug ein Stadtfahrzeug mit Radnabenantrieb, ein Personenkraftwagen, ein Lastkraftwagen oder ein Nutzkraftwagen sein,

### Kurze Beschreibung der Zeichnung

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1: eine schematische Ansicht eines herkömmlichen unaufgelösten Querlenkers;
- Fig. 2: eine schematische Ansicht eines aufgelösten Querlenkers mit zwei schwenkbaren Teilquerlenkern;
- Fig. 3: eine schematische Ansicht eines aufgelösten Querlenkers mit zwei schwenkbaren Teilquerlenkern und eine erste Ausführungsform einer erfindungsgemäßen Querlenkerbasis;
- Fig. 4: eine schematische Ansicht eines aufgelösten Querlenkers mit zwei schwenkbaren Teilquerlenkern und eine zweite Ausführungsform einer erfindungsgemäßen Querlenkerbasis;
- Fig. 5: eine schematische Ansicht eines aufgelösten Querlenkers mit zwei schwenkbaren Teilquerlenkern und eine dritte Ausführungsform einer erfindungsgemäßen Querlenkerbasis.
- Fig. 6-8: schematische Zeichnungen zur Veranschaulichung unterschiedlicher Querlenkerausführungsformen,
- Fig. 9a: eine schematische Draufsicht von oben auf ein uneingelenktes linkes Vorderrad eines Fahrzeugs, welches mit einer speziellen Ausgestaltung der in Figur 8 gezeigten Ausführungsform eines erfindungsgemäßen Querlenkers ausgestattet ist; und
- Fig. 9b: eine schematische Draufsicht auf die in Fig. 9a gezeigte Ausgestaltung im eingelenkten Zustand.

### Ausführliche Beschreibung der Zeichnung

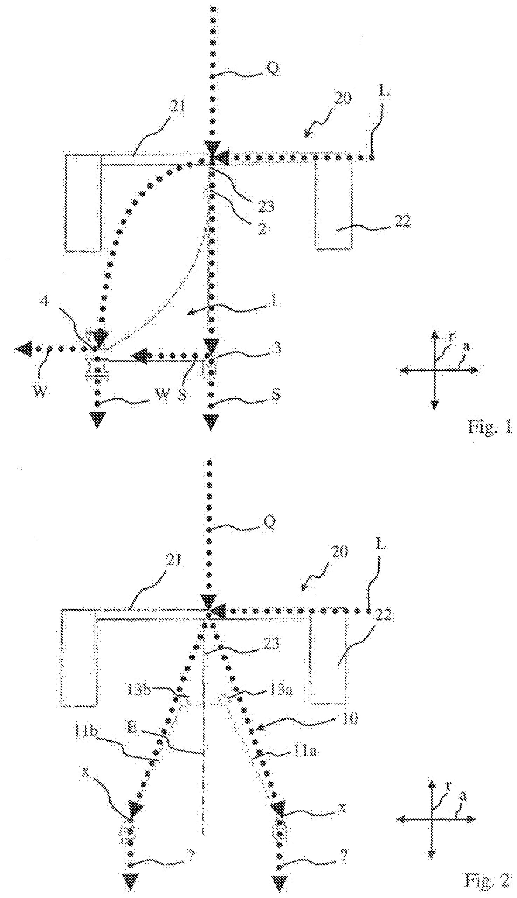

Figur 1 zeigt einen unaufgelösten Querlenker 1 einer herkömmlichen Radaufhängung, wie einer Mc-Pherson-Radaufhängung. Figur 1 zeigt, dass der Querlenker 1 eine asymmetrische im Wesentlichen dreieckige Form aufweist und insgesamt drei Gelenke 2,3,4 umfasst.

Ein Kugelgelenk 2 dient dabei dazu das Rad 20 gelenkig anzubinden. Figur 1 zeigt, dass dabei das Kugelgelenk 2 mit einem Radträger 23 verbunden ist an welchem die Radfelge 21 und der Reifen 22 befestigt sind.

Benachbart zu dem radseitigen Kugelgelenk 2 weist der Querlenker 1 ein fahrzeigseitiges Kugelgelenk 3 auf. Zusätzlich weist der Querlenker ein weiteres fahrzeugseitiges Gelenk 4 in Form eines Gummigelenks auf.

Die gepunkteten Pfeile illustrieren stark schematisiert die auf das Rad 20, den Querlenker und dessen Gelenke 2,3,4 wirkenden Kräfte. Auf das Rad 20 wirkt dabei eine Längskraft L und eine Querkraft Q. welche sich auf den Querlenker 1 und dessen Gelenke 2,3,4 überträgt.

Figur 1 veranschaulicht, dass um eine möglichst hohe Quersteifigkeit zu erzielen, das fahrzeugseitige Kugelgelenk 3, welches benachbart zu dem radseitigen Kugelgelenk 2 ist, axial a und radial r zur Fahrzeuglängsrichtung starr S ausgelegt ist, Das fahrzeugseitige Gummigelenk 4 dient dabei dazu eine gewisse zur Fahrzeuglängsrichtung axiale a und auch radiale r Elastizität zu realisieren.

Figur 2 zeigt einen so genannten aufgelösten Querlenker 10 mit zwei Teilquerlenkem 11a, 11b. Figur 2 illustriert, dass die Teilquerlenker 11a, 11b auf einer Seite jeweils über ein Kugelgelenk 13a, 13b mit dem Radträger 23 verbunden sind. Auf der anderen Seite sind die beiden Teilquerlenker 11a, 11b jeweils getrennt voneinander mit einem fahrzeugseitigen Gelenk x verbunden, welches beispielhaft als Kugelgelenk dargestellt ist. Die Teilquerlenker 11a, 11b sind dabei im Wesentlichen spiegelsymmetrisch angeordnet, wobei die Spiegelebene E senkrecht zur durch die fahrzeugseitigen Gelenke x verlaufenden Achse und mittig zwischen den fahrzeugseitigen Gelenken x steht. Einer oder beide Teilquerlenker 11a, 11b können dabei um eine Schwenkachse schwenkbar ausgestaltet sein, zum Beispiel um dem Rad 20 beim Einschlagen auszuweichen und dadurch den maximalen Lenkeinschlagwinkel des Rades 20 zu vergrößern.

Aus Figur 2 ist ersichtlich, dass bei einem aufgelösten Querlenker 10 ,mit zwei Teilquerlenkem 11a, 11b die in Figur 1 gezeigte Aufteilung der Gelenke x in ein elastisches 4,W,W und ein starres 3,S,S Gelenk nicht mehr möglich ist, da beide Gelenke x dann mit wesentlichen Anteilen an der Beeinflussung der Längs- und Quersteifigkeit beteiligt sind und somit gleichzeitig starr und elastisch sein müssten, was durch den Einsatz von einfachen konventionellen Gelenken, wie einfachen Kugelgelenken, etc. kaum realisierbar ist,

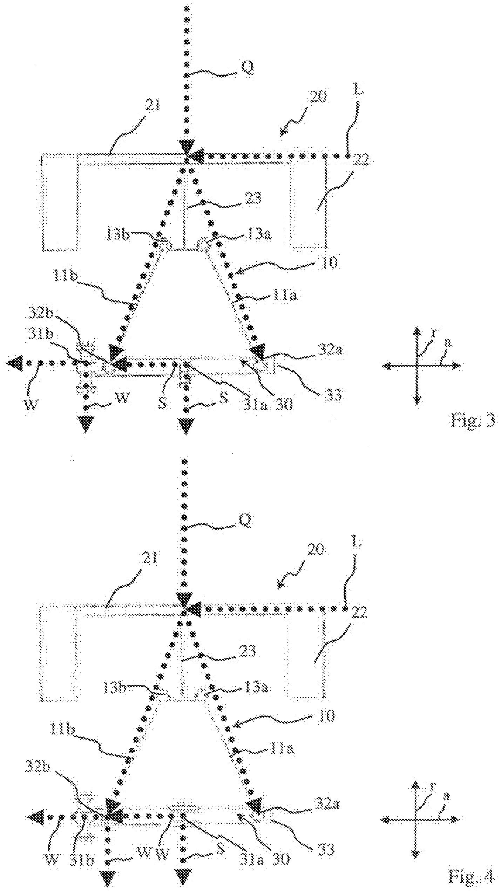

Figur 3 zeigt eine erste Ausführungsform einer erfindungsgemäßen Querlenkerbasis 30 zur Lösung der im Zusammenhang mit Figur 2 erläuterten Längs- und Quersteifigkeitsaufteilungsproblematik.

Figur 3 zeigt, dass die Querlenkerbasis 30 zwei Fahrzeuganbindungsgetenke 31a, 31b zum gelenkigen Anbinden der Quertenkerbasis 30 an das Fahrzeug und zwei Teilquerlenkeranbindungsgelenke 32a, 32b zum gelenkigen Anbinden jeweils eines der, beispielsweise schwenkbaren, Teilquerlenker 11a, 11b an die Querlenkerbasis 30 umfasst. Die Teilquerlenker 11a, 11b sind dabei einerseits jeweils mit einem der Teilquerlenkeranbindungsgelenke 32a, 32b der Querlenkerbasis 30 verbunden. Im Rahmen der gezeigten Ausführungsform sind die Teilquerienker 32a, 32b andererseits jeweils über ein Radverbindungsgelenk 13a, 13b gelenkig mit dem Radträger 23 verbunden.

Figur 3 illustriert, dass die Querlenkerbasis 30 einen Querlenkerbasisgrundkörper 33 aufweist, wobei die Fahrzeuganbindungsgelenke 31a, 31b auf einer Seite des Quedenkerbasisgrundkörpers 33 und die Teilquerlenkeranbindungsgelenke 32a, 32b auf der dazu gegenüberliegenden Seite der Querlenkerbasis 30 angeordnet sind.

Figur 3 veranschaulicht, dass durch die Querlenkerbasis 30 ermöglicht wird, den aufgelösten Querlenker 10 an das Fahrzeug anzubinden und dabei die fahrzeugseitige Anbindung der Querlenkerbasis 30 sowie die Aufteilung beziehungsweise Ausgestaltung von deren Fahrzeuganbindungsgelenke 31a, 31b analog zu der der in Figur 1 gezeigten Gelenkaufteilung und insbesondere unter Einsatz von einfachen herkömmlichen Gelenken zu realisieren.

Im Rahmen der in Figur 3 gezeigten ersten Ausführungsform ist dabei das eine Fahrzeuganbindungsgelenk 31a in Form eines radial r und axial a zur Fahrzeuglängsrichtung starren S,S Kugelgelenkes ausgebildet. Das andere Fahrzeuganbindungsgelenk 32a ist dabei in Form eines radial r und axial a zur Fahrzeuglängsrichtung weichen W,W Gummigelenks ausgebildet. Die Aufteilung der fahrzeugseitigen Gelenke 31a, 31b in ein elastisches 31b,W,W und ein starres 31a,S,S Gelenk entspricht damit der in Figur 1 gezeigten Aufteilung.

Figur 3 zeigt weiterhin, dass im Rahmen der ersten Ausführungsform das radial starre Fahrzeuganbindungsgelenk 31a das zu dem Radträger 23 benachbarte beziehungsweise radträgernahe der beiden Fahrzeuganbindungsgelenke 31a, 31b ist und insbesondere gegenüberliegend zu dem Radträger 23 und zwischen den beiden Teilquerlenkeranbindungsgelenken 32a, 32b angeordnet ist, wobei das andere axial weiche Fahrzeuganbindungsgelenk 31b außerhalb der beiden Teilquerlenkeranbindungsgelenke 32a, 32b angeordnet ist, was sich vorteilhaft auf die Quersteifigkeit auswirkt.

Die in Figur 4 gezeigte zweite Ausführungsform einer erfindungsgemäßen Querlenkerbasis 30 unterscheidet sich im Wesentlichen nur dadurch von der in Figur 3 gezeigten ersten Ausführungsform, dass anstelle des Kugelgelenks ein Schubgelenk 31a als radial r starres Fahrzeuganbindungsgelenk eingesetzt ist, welches im Gegensatz zu dem auch axial a starren Kugelgelenk axial a weich, insbesondere verschiebbar, ist.

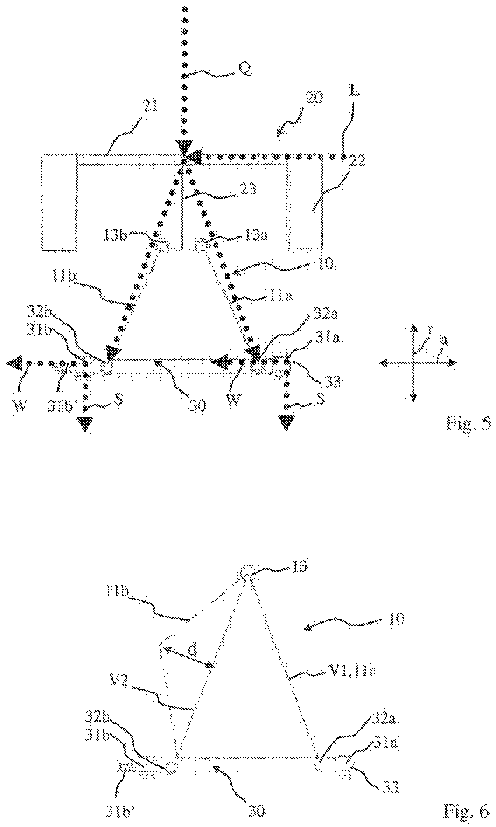

Die in Figur 5 gezeigte dritte Ausführungsform einer erfindungsgemäßen Querlenkerbasis 30 unterscheidet sich zum Einen dadurch von der in Figur 3 gezeigten ersten Ausführungsform, dass die beiden Fahrzeuganbindungsgelenke 31a, 31b außerhalb der beiden Teilquerlenkeranbindungsgelenke 32a,32b und damit auch nicht gegenüberliegend zu dem Radträger 23 angeordnet sind. Anders als in Figur 6 gezeigt, können die beiden Fahrzenganbindungsgelenke 319, 31b auch asymmetrisch angeordnet sein.

Zum Anderen unterscheidet sich die in Figur 5 gezeigte dritte Ausführungsform einer erfindungsgemäßen Querlenkerbasis 30 dadurch von der in Figur 3 gezeigten ersten Ausführungsform, dass beide Fahrzeuganbindungsgelenke 31a, 31b als radial r starre S und axial a weiche W, insbesondere verschiebbare, Schubgelenke oder Drehschubgelenke ausgebildet sind. Insbesondere können die beiden Fahrzeuganbindungagelenke 31a, 31b dabei Schubgelenke sein, da die Querlenkerbasis 30 nicht zwingend drehbar sein muss.

Weiterhin unterscheidet sich die in Figur 5 gezeigte dritte Ausführungsform einer erfindungsgemäßen Querlenkerbasis 30 dadurch von der in Figur 3 gezeigten ersten Ausführungsform, dass eine axiale a Elastizität der Anordnung anstatt durch ein Gummigelenk durch ein zusätzliches elastisches Element 31b' in Form einer Feder realisiert wird. Der Vorteil hierbei ist, dass die Elastizität des federnden Elements 31b' unabhängig von den Gelenken 31a, 31b festgelegt werden kann.

Die Figuren 6 bis 8 sind stark schematisierte Skizzen zur Veranschaulichung unterschiedlicher Ausführungsformen von Radaufhängungen, weiche mit der in Figur 5 gezeigten Ausführungsform einer erfindungsgemäßen Querlenkerbasis 30 sowie einem aufgelösten Querlenker mit einem oder zwei schwenkbaren Teilquerlenkern 11a, 11b ausgestatteten sind. Dann sind schwenkbare Teilquerlenker 11a, 11b mit gestrichelten Linien dargestellt. Die gestrichelten Linien deuten dabei die Form der schwenkbaren Teilquerlenker an und sollen zeigen, dass die schwenkbaren Teilquerlenker 11a, 11b zum Teil oberhalb und/oder unterhalb der Papierebene ausgebildet sein können. Die gezeigten Gelenkpunkte können dreidimensional betrachtet ebenfalls oberhalb und/oder unterhalb der Papierebene hegen. Um Winkel und Auswölbungen der schwenkbaren Teilquerlenker 11a, 11b darstellen zu können, welche oberhalb beziehungsweise unterhalb der Papierebene liegen können, sind diese jeweils im äußeren Bereich der Skizzen dargestellt. Dies soll jedoch nicht dahingehend interpretiert werden, dass die Winkel und Auswölbungen der schwenkbaren Teilquerlenker 11a, 11b in unterschiedliche Richtungen ausgebildet sein müssen.

In den Figuren 6 bis 8 veranschaulichen die durchgezogenen Linien die Schwenkachsen V1, V2 der schwenkbaren Teilquerlenker 11a, 11b und können dabei einer idealisierten Projektion der schwenkbaren Teilquerlenker 11a, 11b entsprechen.

In Figur 6 veranschaulicht eine der durchgezogenen Linien V2 ebenfalls die Schwenkachse und idealisierte Projektion eines schwenkbaren Teilquerlenkers 11b. Die andere durchgezogene Linie V1, 11a illustriert, dass es möglich ist dabei den anderen Teilquerlenker 11a entweder im Wesentlichen gerade und beispielsweise drehbar oder ebenfalls schwenkbar auszugestalten.

Figur 6 zeigt eine Ausführungsform eines aufgelösten Querlenkers 10 mit zwei Teilquerlenkern 11a, 11b, in der die Teilquerlenker 11a, 11b einen gemeinsamen radseitigen Drehpunkt 13 aufweisen, welcher mit dem Drehpunkt des Radträgers des Rades zusammen fallen kann. Die Teilquerlenker 11a, 11b sind dabei einerseits jeweils getrennt voneinander mit einem der Teilquerienkeranbindungsgelenke 32a, 32b der Querlenkerbasis 30, erfindungsgemäß in Form eines Kugelgelenks, verbunden. Andererseits sind die Teilquerlenker 11a, 11b mit einem gemeinsamen Radverbindungsgelenk 13 verbunden.

In der in Figur 6 gezeigten Ausführungsform ist nur der erste Teilquerlenker 11b derart ausgestaltet, dass ein Teil des Teilquerlenkers 11b beabstandet d zu einer Schwenkachse V2 ist, welche sich zwischen dem Radverbindungsgelenk 21 und dem Teilquerlenkeranbindungsgelenk 22 des Teilquerlenkers 11b erstreckt und um welche dieser Teilquerlenker 11b schwenkbar ist. Das Radverbindungsgelenk 13 und das Teilquerlenkeranbindungsgelenk 32b, welches die Querlenkerbasis 30 und den ersten Teilquerlenker 11a gelenkig verbindet, sind dabei Kugelgelenke. Die teilweise Beabstandung des ersten Teilquerlenkers 11b wird dabei dadurch erzielt, dass der erste Teilquerlenker 11b auf einem einfach gewinkelten starren Teilquerlenkersegment basiert. Bei der genauen Formgebung des schwenkbaren Teilquerlenkers 11b können Faktoren, wie der maximale Lenkwinkel, der Nachlauf, die Spreizung, die Kinematik der Ankopplung der Ausweichbewegung, die Festigkeit, der Herstellprozess, etc., berücksichtigt werden. Durch eine Schwenkbewegung dieses Teilquerlenkers 11b um die Schwenkachse V2 kann der beabstandete Teil des ersten Teilquerlenkers 11b dem Rad ausweichen und dadurch ein hoher maximaler Lenkwinkel des Rades in dieser Lenkeinschlagsrichtung erzielt werden Insofern in die andere Lenkeinschlagsrichtung auch ein durchschnittlicher maximaler Lenkwinkel ausreichend ist, beispielsweise wenn der Querlenker nur zur Vereinfachung des seitlichen Einparkens, beispielsweise mit vier parallel eingeschlagenen Räder, eingesetzt wird, ist eine Erhöhung des maximalen Lenkwinkels nur in eine Lenkeinschlagsrichtung ausreichend Daher ist es möglich den zweiten Teilquerlenker 11a gerade auszugestalten.

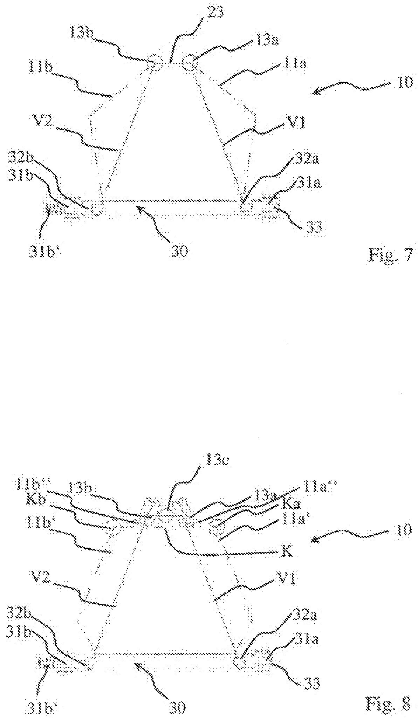

Um den maximalen Lenkwinkel in beide Lenkeinschlagsrichtungen zu erhöhen, beispielsweise um die Wendigkeit des Fahrzeugs zu erhöhen und den Wendekreis des Fahrzeugs zu verbessern, ist in den in Figuren 7 und 8 gezeigten Ausführungsformen sowohl der erste Teilquerlenker 11b als auch der zweite Teilquerlenker 11a derart ausgestaltet, dass ein Teil des Teilquerlenkers 11a, 11b beabstandet d zu der Schwenkachse V2, V1 ist, welche sich zwischen dem Radverbindungsgelenk 13b, 13a und dem jeweiligen Teilquerlenkeranbindungsselenk 32b, 32a der Querlenkerbasis 30 erstreckt und um welche der jeweilige Teilquerlenker 11a, 11b schwenkbar ist

in der in Figur 7 gezeigten Ausführungsform weist der Querlenker zwei Teilquerlenker 11a, 11b auf, welche einerseits jeweils getrennt voneinander mit einem Radverbindungsgelenk 13a, 13b zum gelenkigen Anbinden des Querlenkers an ein Rad verbunden sind und andererseits ebenfalls jeweils getrennt voneinander mit einem Teilquerlenkeranbindungsgelenk 32a, 32b der Querlenkerbasis 30 verbunden sind. Durch die beiden Radverbindungsgelenke 13a, 13b kann insbesondere - ähnlich zu einer Vierlenkerachse - ein virtueller Drehpunkt erzeugt werden.

Im Rahmen der in Figur 7 gezeigten Ausführungsform wird dabei die teilweise Beabstandung des ersten 11b und zweiten 11a Teilquerlenkers ebenso wie in der in Figur 6 gezeigten Ausführungsform dadurch erzielt, dass die Teilquerlenker 11a, 11b jeweils ein einfach gewinkeltes starres Teilquerlenkersegment aufweisen.

Figur 8 zeigt eine Ausführungsform eines aufgelösten Querlenkers mit einem ersten 11b, 11b', 11b" und einem zweiten 11a, 11a', 11a" Teilquerlenker. Dabei sind die beiden Teilquerlenker 11b, 11b', 11b", 11a, 11a', 11a" einerseits gemeinsam mit einem mehrgelenkigen Radverbindungsgelenk 13a, 13b, 13c zum gelenkigen Anbinden des Querlenkers an ein Rad verbunden. Andererseits sind die beiden Teilquerlenker 11b, 11b', 11b", 11a, 11a', 11a" jeweils getrennt voneinander mit einem der Teilquerlenkeranbindungsgelenken 32b, 32a der Querlenkerbasis verbunden. Das Radverbindungsgelenk 13a, 13b, 13c ist dabei in Form einer mehrgelenkigen Zusammenführung 13a, 13b, 13c ausgebildet, welche ein Kugelgelenk 13c und zwei Drehgelenke 13b, 13a umfasst, wobei die Zusammenführung 13a, 13b, 13c durch das Kugelgelenk 13c gelenkig mit dem Rad verbindbar ist und durch die Drehgelenke 13b, 13c gelenkig mit jeweils einem der Teilquerlenker 11b, 11b', 11b", 11a, 11a', 11a" verbunden ist.

Dabei Ist der erste Teilquerlenker 11b, 11b', 11b" derart ausgestaltet, dass ein Teil des ersten Teilquerlenkers 11b, 11b', 11b" beabstandet d zu der Schwenkachse V2 ist, welche sich zwischen dem Radverbindungsgelenk 13a, 13b, 13c und dem einen Teilquerlenkeranbindungsgelenk 32b der Querlenkerbasis 30, mit dem der erste Teilquerlenker 11b, 11b', 11b" verbunden ist, erstreckt und um welche der erste Teilquerlenker 11b, 11b', 11b" schwenkbar ist. Ebenso ist der zweite Teilquerlenker 11a, 11a', 11a" derart ausgestaltet, dass ein Teil des zweiten Teilquerlenkers 11a, 11a', 11a" beabstandet d' zu der Schwenkachse V1 ist, weiche sich zwischen dem Radverbindungsgelenk 13a, 13b, 13c und dem Teilquerlenkeranbindungsgelenk 32a der Querlenkerbasis 30, mit dem der zweite Teilquerlenker verbunden ist, erstreckt und um welche der zweite Teilquerlenker 11a, 11a', 11a" schwenkbar ist.

Der erste Teilquerlenker 11b, 11b', 11b" wird dabei durch ein gerades Teilquerlenkersegment 11b", ein gewinkeltes Teilquerienkersegment 11b' und ein flexibles Verbindungselement Kb, insbesondere in Form eines Kugelgelenkes, gebildet, wobei das flexible Verbindungselement Kb das gerade Teilquerienkersegment 11b" mit dem gewinkelten Teilquerlenkersegment 11b' zueinander gewinkelt verbindet. Dabei resultiert insgesamt eine U-förmige beziehungsweise bügelförmige Form des ersten Teilquerlenker 11b, 11b'. 11b". Der zweite Teilquerienker 11a, 11a, 11a" wird dabei ebenfalls durch ein gerades Teilquerlenkersegment 11a", ein gewinkeltes Teilquerienkersegment 11a' und ein flexibles Verbindungselement Ka, insbesondere in Form eines Kugelgelenkes, gebildet, wobei das flexible Verbindungselement Ka das gerade Teilquerlenkersegment 11a" mit dem gewinkelten Teilquerlenkersegment 11a' zueinander gewinkelt verbindet. Dabei resultiert ebenfalls insgesamt eine U-förmige beziehungsweise bügelförmige Form des zweiten Teilquerlenker 11a, 11a', 11a",

Zudem weist der Querlenker eine Querlenkerkoppel K auf, welche den ersten 11b, 11b', 11b" und den zweiten 11a, 11a, 11a" Teilquerlenker über deren flexible Verbindungselemente Kb,Ka verbindet

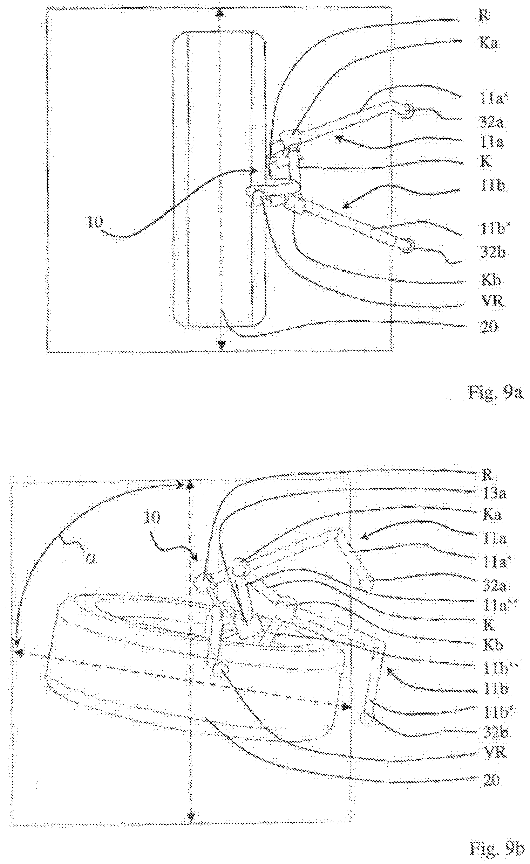

Die Figuren 9a und 9b zeigen ein linkes Vorderrad 20 eines Fahrzeugs, welches mit einer speziellen Ausgestaltung der in Figur 8 skizzierten Ausführungsform eines Querlenkers ausgestattet ist.

Die Figuren 9a und 9b sind schematische Draufsichten von oben auf das Vorderrad 20. Dabei zeigt Figur 9a das Vorderrad 20 im uneingelenkten Zustand also beispielsweise bei einer Geradeausfahrt, wobei Figur 9b das Vorderrad 20 im maximal eingelenkten Zustand zeigt. Figur 9b zeigt insbesondere, dass durch die gezeigte Ausgestaltung ein maximaler Lenkwinkel α von fast 90° realisiert werden kann.

Figur 9a zeigt insbesondere, dass der Querlenker 10 einen hinteren 11b, 11b', 11b" und einen vorderen 11a, 11a', 11a" Teilquerlenker umfasst. Der hintere Teilquerlenker 11b, 11b', 11b" ist dabei mit einem ersten Teilquerlenkeranbindungsgelenk 32b in Form eines Kugelgelenks verbunden, wobei der vordere Teilquerlenker 11a, 11a', 11a" mit einem zweiten Teilquerlenkeranbindungsgelenk 32a in Form eines Kugelgelenks verbunden ist.

Die Figuren 9a und 9b illustrieren, dass die beiden Teilquerlenker 11b, 11b', 11b", 11a, 11a, 11a" eine im Wesentlichen U-förmig beziehungsweise bugelförmige Gestalt aufweisen. Beim Übergang von der uneingelenkten Stellung in die maximal eingelenkte Stellung des Rades, werden dabei die beiden U-förmigen Teilquerlenker 11b, 11b', 11b", 11a, 11a', 11a" von einer im Wesentlichen vertikalen Stellung, jeweils um eine sich entlang der Öffnung der U-förmigen Teilquerlenker 11b, 11b', 11b"; 11a, 11a', 11a" erstreckende Achse in eine im Wesentlichen horizontale Stellung geschwenkt, wobei das Rad 20 durch die Öffnung eines der U-förmigen Teilquerlenker 11b, 11b', 11b" in den von diesem Teilquerlenker 11b, 11b', 11b" umgebenen Raum eindringen kann. Bei einem Lenkeinschlag in die andere Lenkeinschlagsrichtung kann das Rad 20 durch die Öffnung des anderen U-förmigen Teilquerlenkers 11a,11a',11a" in den von diesem Teilquerlenker 11a,11a',11a" umgebenen Raum eindringen. So kann vorteilhafterweise der maximale Lenkwinkel des Rades 20 in beide Lenkeinschlagsrichtungen deutlich erhöht werden.

Die Figuren 9a und 9b veranschaulichen, dass sowohl der hintere Teilquerlenker 11b,11b',11b" als auch der vordere Teilquerlenker 11a,11a',11a" jeweils durch ein gerades Teikquerlenkersegment 11b",11a", ein gewinkeltes Teilquerlenkersegment 11b',11a' und ein flexibles Verbtndungselement Kb,Ka in Form eines Kugelgelenkes gebildet werden, wobei jeweils das flexible Verbindungselement Kb,Ka das gerade Teilquerlenkersegment 11b",11a" mit dem gewinkelten Teilquertenkersegment 11b',11a' zueinander gewinkelt verbindet, wodurch die U-förmige beziehungsweise bügelförmige Gestalt resultiert.

Die Figuren 9a und 9b illustrieren zudem, dass der hintere Teilquerlenker 11a und der vordere Teilquerlenker 11b jeweils durch das gewinkelte Teilquerlenkersegment 11b',11a' mit dem jeweiligen Teilquerlenkeranbindungsgelenk 32b,32a der Querlenkerbasis (nicht dargestellt) verbunden sind.

Die Figuren 9a und 9b veranschaulichen weiterhin, dass der hintere Teilquerlenker 11b und der vordere Teilquerlenker 11a jeweils durch das gerade Teilquerlenkersegment 11b',11a' mit einem Drehgelenk 13b, 13a eines Radverbindungsgelenks 13a,13b,13c verbunden sind, weiches in Form einer mehrgelenkigen Zusammenführung 13a,13b,13c ausgebildet ist, die ein Kugelgelenk 13c und zwei Drehgelenke 13a,13b umfasst und die durch das Kugelgelenk 13c gelenkig mit dem Radträger des Rades 20 verbunden ist.

Die Figuren 9a und 9b veranschaulichen zudem, dass sich die Schwenkachse des hinteren Teilquerlenkers 11b zwischen dem Radverbindungsgelenk 13b und dem Teilquerlenkeranbindungsgelenk 32b des hinteren Teilquerlenkers 11b und die Schwenkachse des vorderen Teilquerlenkers 11a zwischen dem Radverbindungsgelenk 13a und dem Teilquerlenkeranbindungsgelenk 32a des vorderen Teilquerlenkers 11a erstreckt. Dass dabei die Teilquerlenker 11b, 11a dabei teilweise deutlich beabstandet zu der jeweiligen Schwenkachse ausgebildet sind.

Zudem zeigen die Figuren 9a und 9b, dass der Querlenker 20 eine Querlenkerkoppel K aufweist, welche den ersten 11b und den zweiten 11a Teilquerlenker über deren flexible Verbindungselemente Kb,Ka verbindet. Darüber hinaus zeigen die Figuren 9a und 9b, dass der vordere Teilquerlenker 11a über eine Radkoppel R mit dem Radträger 23 des Rades 20 gekoppelt ist. Durch die Radkoppel R kann dann eine Lenkbewegung des Rades 20 in eine Schwenkbewegung des vorderen Teilquerlenkers 11a und über die Querlenkerkoppel K auch in eine Schwenkbewegung des hinteren Teitquerlenkers 11b übertragen werden.

Ferner skizzieren die Figuren 9a und 9b, dass das Vorderrad zusätzlich eine vertikale Radführung VR aufweisen kann, welche aus Gründen der Übersichtlichkeit der Figuren jedoch nur stark schematisiert dargestellt ist.

### Bezugszeichenliste

- L: Längskraft
- Q: Querkraft
- a: axial zur Fahrzeuglängsrichtung
- r: radial zur Fahrzeuglängsrichtung
- W: weich
- S: starr
- α: maximaler Lenkwinkel

- 1: herkömmlicher Querlenker
- 2: radseitiges Kugelgelenk
- 3: zu radseitigem Gelenk benachbartes fahrzeugseitiges Kugelgelenk
- 4: fahrzeugseitiges Gummigelenk

- 10: Querlenker, insbesondere aufgelöster Querlenker
- 11a,11b: Teilquerlenker
- 13,13a, 1 3b, 13c: Radverbindungsgelenk des Teilquerlenkers
- x: Gelenk zur fahrzeugseitigen Anbindung
- V1, V2: Schwenkachse des Teilquerlenkers
- E: Spiegelebene
- d: Abstand zwischen beabstandetem Teilquerlenkerteil und Schwenkachse
- 11a', 11a": starres Teilquerlenkersegment
- 11b',11b": starres Teilquerlenkersegment
- Ka,Kb: Kugelgelenk des Teilquerlenkers
- K: Querlenkerkoppel
- R: Radkoppel
- VR: vertikale Radführung

- 20: Rad
- 21: Felge
- 22: Reifen
- 23: Radträger

- 30: Querlenkerbasis
- 31a: radial starres Fahrzeuganbindungsgelenk
- 31b: axial weiches Fahrzeugsnbindungsgelenk
- 31b': zusätzliches elastisches Element
- 32a,32b: Teilquerlenkeranbindungsgelenke
- 33: Querlenkerbasisgrundkörper

## Patentansprüche

1. Querlenkerbasis (30) zum Anbinden eines aufgelösten Querlenkers (10) für ein Rad (20) an ein Fahrzeug, welcher (10) mindestens zwei Teilquerlenker (11a,11b) umfasst, die einerseits mit einem fahrzeugseitigen Gelenk (32a,32b) und andererseits mit einem radseitigen Gelenk (13,13a,13b,13c) verbindbar sind,
wobei die Querlenkerbasis (30)
mindestens zwei Fahrzeuganbindungsgelenke (31a,31b) zum gelenkigen Anbinden der Querlenkerbasis (30) an das Fahrzeug, und
mindestens zwei Teilquerlenkeranbindungsgelenke (32a,32b) zum fahrzeugseitigen gelenkigen Anbinden jeweils eines der Teilquerlenker (11a,11b) an die Querlenkerbasis (30) umfasst,
**dadurch gekennzeichnet, dass** die Teilquerlenkeranbindungsgelenke (32a, 32b) Kugelgelenke sind.

2. Querlenkerbasis (30) nach Anspruch 1, wobei mindestens eines der Fahrzeuganbindungsgelenke (31a) radial zur Fahrzeuglängsrichtung starr ist.

3. Querlenkerbasis (30) nach Anspruch 1 oder 2, wobei mindestens eines der Fahrzeuganbindungsgelenke (31b) axial zur Fahrzeuglängsrichtung weich ist.

4. Querlenkerbasis (30) nach Anspruch 3, wobei das radial starre Fahrzeuganbindungsgelenk (31a) auch axial zur Fahrzeuglängsrichtung starr ist oder
wobei das radial starre Fahrzeuganbindungsgelenk (31a) axial zur Fahrzeuglängsrichtung weich ist.

5. Querlenkerbasis (30) nach Anspruch 4, wobei das axial weiche Fahrzeuganbindungsgelenk (31b) auch radial zur Fahrzeuglängsrichtung weich ist, oder
wobei das axial weiche Fahrzeuganbindungsgelenk (31b) radial zur Fahrzeuglängsrichtung starr ist.

6. Querlenkerbasis (30) nach Anspruch 5, wobei das axial und radial weiche Fahrzeuganbindungsgelenk (31b) ein elastisches Festkörpergelenk oder ein Gelenk, nämlich ein Schubgelenk oder Drehschubgelenk, mit einer elastischen Gelenkschale ist.

7. Querlenkerbasis (30) nach einem der Ansprüche 2 bis 5, wobei das radial starre Fahrzeuganbindungsgelenk (31a) als axial zur Fahrzeuglängsrichtung verschiebbares Schubgelenk oder Drehschubgelenk und das axial weiche Fahrzeuganbindungsgelenk (31b) als radial starres, axial zur Fahrzeuglängsrichtung verschiebbares Schubgelenk oder Drehschubgelenk ausgestaltet ist, wobei die Querlenkerbasis (30) ein axial zur Fahrzeuglängsrichtung elastisches Element, nämlich eine Feder (31b'), umfasst.

8. Querlenkerbasis (30) nach einem der Ansprüche 1 bis 7, wobei das radial starre Fahrzeuganbindungsgelenk (31a) das, bezogen auf die Vorwärtsfahrtrichtung des Fahrzeugs, vordere Fahrzeuganbindungsgelenk (31a) und das axial weiche Fahrzeuganbindungsgelenk (31b) das, bezogen auf die Vorwärtsfahrtrichtung des Fahrzeugs, hintere Fahrzeuganbindungsgelenk (31a) ist.

9. Querlenkerbasis (30) nach einem der Ansprüche 1 bis 8, wobei die Teilquerlenkeranbindungsgelenke (32a,32b) radial zur Fahrzeuglängsrichtung und axial zur Fahrzeuglängsrichtung starr sind.

10. Querlenkerbasis (30) nach einem der Ansprüche 1 bis 9, wobei die Querlenkerbasis (30) einen plattenförmigen oder balkenförmigen Querlenkerbasisgrundkörper (33) aufweist, wobei die Fahrzeuganbindungsgelenke (31a,31b) und die Teilquerlenkeranbindungsgelenke (31a,31b) auf der gleichen Achse angeordnet sind.

11. Radaufhängung für ein durch einen Radnabenantrieb angetriebenes gelenktes Rad eines Fahrzeugs, umfassend
eine Querlenkerbasis (30) nach einem der Ansprüche 1 bis 10 und
einen aufgelösten Querlenker (10) mit mindestens zwei Teilquerlenkern (11a,11b),
wobei die Teilquerlenker (11a,11b) einerseits mit einem Teilquerlenkeranbindungsgelenk (32a,32b) der Querlenkerbasis (30) und andererseits mit einem Radverbindungsgelenk (13,13a,13b,13c) zum gelenkigen Anbinden des Querlenkers (10) an das Rad (20) verbunden oder verbindbar sind.

12. Radaufhängung nach Anspruch 11, wobei mindestens einer der Teilquerlenker (11a,11b) um eine, insbesondere sich zwischen dem Teilquerlenkeranbindungsgelenk (32a,32b) und dem Radverbindungsgelenk (13,13a,13b,13c) des Teilquerlenkers (11a,11b) erstreckende, Schwenkachse (V1,V2) schwenkbar ist.

## Claims

1. Transverse link base (30) for attaching a separated transverse link (10) for a wheel (20) to a vehicle, which transverse link (10) comprises at least two part transverse links (11a, 11b) which can be connected on one side to a vehicle-side joint (32a, 32b) and on the other side to a wheel-side joint (13, 13a, 13b, 13c),
the transverse link base (30) comprising at least two vehicle attaching joints (31a, 31b) for attaching the transverse link base (30) in an articulated manner to the vehicle, and
at least two part transverse link attaching joints (32a, 32b) for the vehicle-side articulated attachment of in each case one of the part transverse links (11a, 11b) to the transverse link base (30),
**characterized in that**
the part transverse link attaching joints (32a, 32b) are ball joints.

2. Transverse link base (30) according to Claim 1, at least one of the vehicle attaching joints (31a) being rigid radially with respect to the vehicle longitudinal direction.

3. Transverse link base (30) according to Claim 1 or 2, at least one of the vehicle attaching joints (31b) being soft axially with respect to the vehicle longitudinal direction.

4. Transverse link base (30) according to Claim 3, the radially rigid vehicle attaching joint (31a) also being rigid axially with respect to the vehicle longitudinal direction, or
the radially rigid vehicle attaching joint (31a) being soft axially with respect to the vehicle longitudinal direction.

5. Transverse link base (30) according to Claim 4, the axially soft vehicle attaching joint (31b) also being soft radially with respect to the vehicle longitudinal direction, or
the axially soft vehicle attaching joint (31b) being rigid radially with respect to the vehicle longitudinal direction.

6. Transverse link base (30) according to Claim 5, the axially and radially soft vehicle attaching joint (31b) being an elastic solid body joint or a joint, namely a sliding joint or a turning and sliding joint, with an elastic joint shell.

7. Transverse link base (30) according to one of Claims 2 to 5, the radially rigid vehicle attaching joint (31a) being configured as a sliding joint or a turning and sliding joint which can be displaced axially with respect to the vehicle longitudinal direction, and the axially soft vehicle attaching joint (31b) being configured as a radially rigid sliding joint or turning and sliding joint which can be displaced axially with respect to the vehicle longitudinal direction, the transverse link base (30) comprising an element which is elastic axially with respect to the vehicle longitudinal direction, namely a spring (31b').

8. Transverse link base (30) according to one of Claims 1 to 7, the radially rigid vehicle attaching joint (31a) being the front (in relation to the forward travel direction of the vehicle) vehicle attaching joint (31a), and the axially soft vehicle attaching joint (31b) being the rear (in relation to the forward travel direction of the vehicle) vehicle attaching joint (31a).

9. Transverse link base (30) according to one of Claims 1 to 8, the part transverse link attaching joints (32a, 32b) being rigid radially with respect to the vehicle longitudinal direction and axially with respect to the vehicle longitudinal direction.

10. Transverse link base (30) according to one of Claims 1 to 9, the transverse link base (30) having a plate-shaped or beam-shaped transverse link base main body (33), the vehicle attaching joints (31a, 31b) and the part transverse link attaching joints (31a, 31b) being arranged on the same axis.

11. Wheel suspension system for a steered wheel of a vehicle, which wheel is driven by way of a wheel hub drive, comprising
a transverse link base (30) according to one of Claims 1 to 10, and
a separated transverse link (10) with at least two part transverse links (11a, 11b),
the part transverse links (11a, 11b) being connected or being capable of being connected on one side to a part transverse link attaching joint (32a, 32b) of the transverse link base (30) and on the other side to a wheel connecting joint (13, 13a, 13b, 13c) for attaching the transverse link (10) in an articulated manner to the wheel (20).

12. Wheel suspension system according to Claim 11, it being possible for at least one of the part transverse links (11a, 11b) to be pivoted about a pivot axis (V1, V2) which extends, in particular, between the part transverse link attaching joint (32a, 32b) and the wheel connecting joint (13, 13a, 13b, 13c) of the part transverse link (11a, 11b).

## Revendications

1. Base de montage pour bras latéral (30) pour la liaison d'un bras latéral dissocié (10) pour une roue (20) à un véhicule, qui (10) comprend au moins deux bras latéraux partiels (11a, 11b), qui peuvent être reliés d'une part à une articulation côté véhicule (32a, 32b) et d'autre part à une articulation côté roue (13, 13a, 13b, 13c), dans laquelle la base de montage pour bras latéral (30) comprend au moins deux articulations de liaison au véhicule (31a, 31b) pour la liaison articulée de la base de montage pour bras latéral (30) au véhicule et au moins deux articulations de liaison de bras latéral partiel (32a, 32b) pour la liaison articulée côté véhicule respectivement d'un des bras latéraux partiels (11a, 11b) à la base de montage pour bras latéral (30), **caractérisée en ce que** les articulations de liaison de bras latéral partiel (32a, 32b) sont des articulations à rotule.

2. Base de montage pour bras latéral (30) selon la revendication 1, dans laquelle au moins une des articulations de liaison au véhicule (31a) est rigide radialement par rapport à la direction longitudinale du véhicule.

3. Base de montage pour bras latéral (30) selon la revendication 1 ou 2, dans laquelle au moins une des articulations de liaison au véhicule (31b) est souple axialement par rapport à la direction longitudinale du véhicule.

4. Base de montage pour bras latéral (30) selon la revendication 3, dans laquelle l'articulation de liaison au véhicule radialement rigide (31a) est également rigide axialement par rapport à la direction longitudinale du véhicule ou dans laquelle l'articulation de liaison au véhicule radialement rigide (31a) est souple axialement par rapport à la direction longitudinale du véhicule.

5. Base de montage pour bras latéral (30) selon la revendication 4, dans laquelle l'articulation de liaison au véhicule axialement souple (31b) est également souple radialement par rapport à la direction longitudinale du véhicule ou dans laquelle l'articulation de liaison au véhicule axialement souple (31b) est rigide radialement par rapport à la direction longitudinale du véhicule.

6. Base de montage pour bras latéral (30) selon la revendication 5, dans laquelle l'articulation de liaison au véhicule axialement et radialement souple (31b) est une articulation à corps solide élastique ou une articulation, à savoir un joint à glissière ou un joint articulé cylindrique, avec un coussinet d'articulation élastique.

7. Base de montage pour bras latéral (30) selon l'une quelconque des revendications 2 à 5, dans laquelle l'articulation de liaison au véhicule radialement rigide (31a) est configurée comme un joint à glissière ou un joint articulé cylindrique déplaçable axialement par rapport à la direction longitudinale du véhicule et l'articulation de liaison au véhicule axialement souple (31b) est configurée comme un joint à glissière ou un joint articulé cylindrique radialement rigide déplaçable axialement par rapport à la direction longitudinale du véhicule, dans laquelle la base de montage pour bras latéral (30) comprend un élément élastique axialement par rapport à la direction longitudinale du véhicule, à savoir un ressort (31b').

8. Base de montage pour bras latéral (30) selon l'une quelconque des revendications 1 à 7, dans laquelle l'articulation de liaison au véhicule radialement rigide (31a) est, par rapport à la direction de marche avant du véhicule, l'articulation de liaison avant au véhicule (31a) et l'articulation de liaison au véhicule axialement souple (31b) est, par rapport à la direction de marche avant du véhicule, l'articulation de liaison arrière au véhicule (31a).

9. Base de montage pour bras latéral (30) selon l'une quelconque des revendications 1 à 8, dans laquelle les articulations de liaison de bras latéral partiel (32a, 32b) sont rigides radialement par rapport à la direction longitudinale du véhicule et axialement par rapport à la direction longitudinale du véhicule.

10. Base de montage pour bras latéral (30) selon l'une quelconque des revendications 1 à 9, dans laquelle la base de montage pour bras latéral (30) présente un corps de base en forme de plaque ou de poutre (33) pour la base de montage pour bras latéral, dans laquelle les articulations de liaison au véhicule (31a, 31b) et les articulations de liaison de bras latéral partiel (31a, 31b) sont disposées sur le même axe.

11. Suspension de roue pour une roue articulée d'un véhicule entraînée par un entraînement de moyeu de roue, comprenant
une base de montage pour bras latéral (30) selon l'une quelconque des revendications 1 à 10, et
un bras latéral dissocié (10) avec au moins deux bras latéraux partiels (11a, 11b),
dans laquelle les bras latéraux partiels (11a, 11b) sont ou peuvent être reliés d'une part à une articulation de liaison de bras latéral partiel (32a, 32b) de la base de
montage pour bras latéral (30) et d'autre part à une articulation de liaison de roue (13, 13a, 13b, 13c) pour la liaison articulée du bras latéral (10) à la roue (20).

12. Suspension de roue selon la revendication 11, dans laquelle au moins un des bras latéraux partiels (11a, 11b) peut pivoter autour d'un axe de pivotement (V1, V2) s'étendant en particulier entre l'articulation de liaison de bras latéral partiel (32a, 32b) et l'articulation de liaison de roue (13, 13a, 13b, 13c) du bras latéral partiel (11a, 11b).
